# EUROPÄISCHE PATENTSCHRIFT

(11) **EP 1 802 945 B1**
(45) Veröffentlichungstag und Bekanntmachung des Hinweises auf die Patenterteilung: **08.07.2009**
(21) Anmeldenummer: 05806783.6
(22) Anmeldetag: 17.10.2005
(51) Int. Cl.: G01G 11/08

(54) **GRAVIMETRISCHE DOSIERVORRICHTUNG FÜR SCHÜTTGÜTER**
GRAVIMETRIC METERING DEVICE FOR BULK PRODUCTS
DISPOSITIF DOSEUR GRAVIMETRIQUE POUR PRODUITS EN VRAC

(30) Priorität: 17.10.2004 DE 102004050709
(43) Veröffentlichungstag der Anmeldung: 04.07.2007
(73) Patentinhaber: Pfister GmbH, 86165 Augsburg (DE)
(72) Erfinder: HÄFNER, Hans, W., 86551 Aichach-Walchshofen (DE)
(74) Vertreter: Fiener, Josef
(86) Internationale Anmeldenummer: PCT/EP2005/011125
(87) Internationale Veröffentlichungsnummer: WO 2006/040186

(56) Entgegenhaltungen:
- EP-A- 0 530 797
- WO-A-98/53283
- WO-A-99/27331

## Beschreibung

Die Erfindung betrifft eine gravimetrische Dosiervorrichtung für Schüttgüter gemäß dem Oberbegriff des Patentanspruches 1.

Aus der DE-C-32 17 406, ist eine Vorrichtung zum kontinuierlichen gravimetrischen Dosieren von schüttfähigem Gut bekannt, das über eine Aufgabeöffnung in Taschen eines um eine vertikale Achse drehbaren Rotors geleitet und an einer zur Aufgabeöffnung in Drehrichtung des Rotors versetzten Entleerungsöffnung pneumatisch ausgetragen wird. Das Gehäuse des Rotors ist schwenkbar um eine im wesentlichen horizontale Achse gelagert und mit einer entfernt von dieser Achse angeordneten Kraftmessvorrichtung verbunden. Die horizontale Achse verläuft dabei durch die Mitten von elastischen Anschlussgliedern, so dass Kräfte, die bei der Belastung der Dosiervorrichtung auftreten, kompensiert werden können. Mit einer derartigen Dosiervorrichtung lässt sich eine verhältnismäßig hohe Genauigkeit erzielen, jedoch erfordert sie einen relativ großen Platzbedarf und weist einen relativ kleinen Austragsquerschnitt für das Schüttgut auf. Zudem ist sie noch relativ bauaufwendig, insbesondere wegen der erforderlichen Achsenkonstruktion, die zur Vermeidung von Fluchtungsfehlern genau ausgeführt sein muss, um Reaktionen auf das Wägeergebnis und damit die Dosiergenauigkeit zu vermeiden. Ähnliches gilt für eine Drehteller-Dosiervorrichtung gemäß der WO 93/05372 der Anmelderin.

Weiterhin wurde in der EP-A-0 530 797 von der Anmelderin bereits vorgeschlagen, dass der Rotor als Messteller ausgebildet ist, der in mehrere unabhängig voneinander geringfügig vertikal bewegbare, gleich große Sektoren unterteilt ist. Die jeweilige Kraftmessvorrichtung ist dabei unterhalb der einzelnen Sektoren angeordnet und bestimmt die Masse des auf jeweils einem Sektor befindlichen-Gutes beim Vorbeilauf eines Sektors. Diese Dosiervorrichtung weist jedoch aufgrund der Unterteilung in drei oder mehr Sektoren und der dadurch notwendigen Verbindungsstellen einen relativ hohen Bauaufwand bei ebenfalls relativ kleinem Austragsquerschnitt auf.

Dies gilt zum Teil auch für die in der WO 99/27331 von der Anmelderin vorgeschlagene Ausbildung der Messstrecke als Messtellerring mit zentraler Schüttgutzuführung, wodurch sich die kompakte Dosiervorrichtung einfach unter Schüttgutbehältern installieren lässt. Dabei sind jedoch noch relativ aufwendige Radialschlitze und Gelenkstellen sowie eine Vielzahl von Wägezellen als Kraftmessvorrichtungen erforderlich.

Demzufolge liegt der Erfindung die Aufgabe zugrunde, eine gravimetrische Dosiervorrichtung mit besonders einfachem, kompakten Aufbau, großem Austragsquerschnitt für das Schüttgut und hoher Messgenauigkeit zu schaffen.

Diese Aufgabe wird erfindungsgemäß gelöst mit einer gravimetrischen Dosiervorrichtung mit den Merkmalen des Anspruches 1. Bevorzugte Weiterbildungen der erfindungsgemäßen gravimetrischen Dosiervorrichtung sind in den abhängigen Ansprüchen angegeben.

Durch die Entkoppelung der Förderwerkzeuge in wenigstens einem Freiheitsgrad, insbesondere in der Höhe oder Vertikalrichtung ergibt sich eine hohe Messgenauigkeit, da Kraftnebenschlüsse von der Wägeplattform fern gehalten werden. Zudem wird der Bauaufwand beträchtlich vereinfacht, da prinzipiell nur eine Wägezelle und zugeordnete Auswerteelektronik erforderlich ist. Hierbei lässt sich das jeweilige Momentangewicht sowohl absolut (durch Aufsummierung der Messwerte der Kraftmessvorrichtung) als auch relativ bezüglich der Förderzone bzw. Beschickungsstation oder der Entleerungsstation erfassen. Zur Einhaltung einer bestimmten Momentanförderstärke kann somit der Rotor in seiner Umfangsgeschwindigkeit geregelt werden, um eine bestimmte Dosierleistung an der Entleerungsstation einzuhalten. Hierdurch wird die Messgenauigkeit pro Zeiteinheit besonders zuverlässig eingehalten. Durch den gemeinsam mit den Förderwerkzeugen des Rotors umlaufenden Zentralaustragskegel mit wenigstens einem Aktivatorarm wird in vorteilhafter Weise ein sicherer Schüttgutaustrag über einen großen Austragquerschnitt aus dem darüber angeordneten Bunker gewährleistet. Das Schüttgut wird somit durch die Förderwerkzeuge direkt aus dem gesamten, großflächigen Anschlussquerschnitt des Schüttgutbunkers über den feststehenden Austragsboden abgezogen, über den Wägesektor (Wägeplattform bzw. Knickbrücke) gefördert und an der Abwurfzone unmittelbar entleert bzw. in den Prozess eindosiert.

Weitere Merkmale und Vorteile der erfindungsgemäßen Vorrichtung ergeben sich aus der nachfolgenden Beschreibung von Ausführungsbeispielen anhand der Zeichnungen. Es zeigen:
- Fig. 1: einen schematischen Schnitt eines Ausführungsbeispiels der Dosiervorrichtung;
- Fig. 2: eine Draufsicht auf die Vorrichtung nach Fig. 1 entlang der Messtellerebene;
- Fig. 3: eine ähnliche Vorrichtung wie in Fig. 2 in abgewandelter Ausführung; und
- Fig. 4: eine weitere Ausführung eines Förderwerkzeuges in vergrößerter Ansicht.

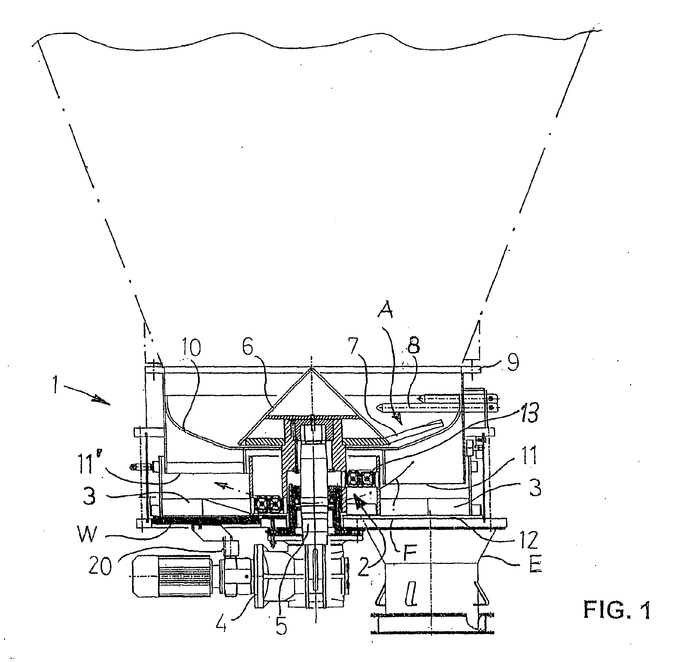

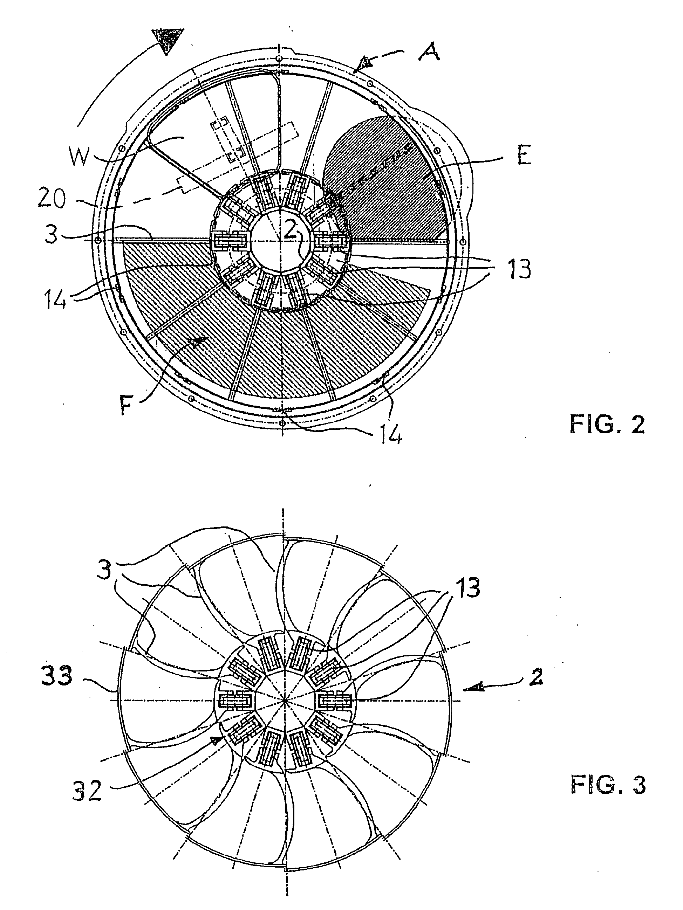

Fig. 1 und 2 zeigen eine Ausführungsform einer erfindungsgemäßen Dosiervorrichtung 1 mit einem horizontal umlaufenden Rotor 2, der über eine Wägeplattform W mit einer Lastzelle bzw. Kraftmessvorrichtung 20 umläuft ist. Der Rotor 2 wird von einem Motor 4 mit einstellbarer bzw. geregelter Drehzahl angetrieben. Die davon angetriebene Welle 5 ist mit einem zentralen Austragkegel 6 verbunden und weist radial nach außen verlaufende Rührarme 7 zur Aktivierung auf. Die Dosiervorrichtung 1 ist dabei mit einem Flansch 9 an einem Bunker (in Strichpunktlinien angedeutet) oder Silo befestigt, so dass keine Stützgerüste oder ähnliche Tragstrukturen erforderlich sind. Zur Unterbindung der Gutzufuhr ist zudem ein Nadelschieber 8 vorgesehen, der über einer wannenförmigen Abdeckung 10 eingeschoben werden kann. Diese Abdeckung 10 erstreckt sich etwa über den halben Umfang des Rotors 2 (in Fig. 1: hier in die Zeichenebene hinein; in Fig. 2 in der oberen Hälfte) wobei jedoch durch den Schnittverlauf knapp oberhalb des Rotors 2 die Abdeckung 10 nicht sichtbar ist, sondern nur durch den Bezugspfeil A angedeutet ist. Im Wesentlichen wird durch die Abdeckung 10 die Wägestation W und die Entleerungsstation E überdeckt, während eine Förderzone F frei bleibt.

Durch diese unmittelbare Verbindung mit dem darüber angeordneten Bunker wird eine Aktivierungszone A von etwa 160° und eine Förderzone F von etwa 200° Teilungswinkel gebildet (vgl. auch Fig. 2), so dass sich die Schüttgutzuführung praktisch über den gesamten 360°-Bereich erstreckt, wie dies in Fig. 1 mit dem geschwungenen Pfeil F angedeutet ist. Entgegengesetzt zur Förderzone F ist, wie in Fig. 2 dargestellt, nach einer Wägeplattform W eine Entleerungsstation E in Form eines Austrittschachtes stationär angeordnet, so dass der Rotor 2 geleert ist, bevor er wiederum zur Förderzone F gelangt. Das Schüttgut wird dabei mit radial ausgerichteten Förderwerkzeugen 3 auf einem Austragboden 12 gefördert, der bis auf eine Öffnung an der Entleerungsstation E und eine elastische Lagerung am Rand der Wägeplattform W durchgehend ausgebildet ist.

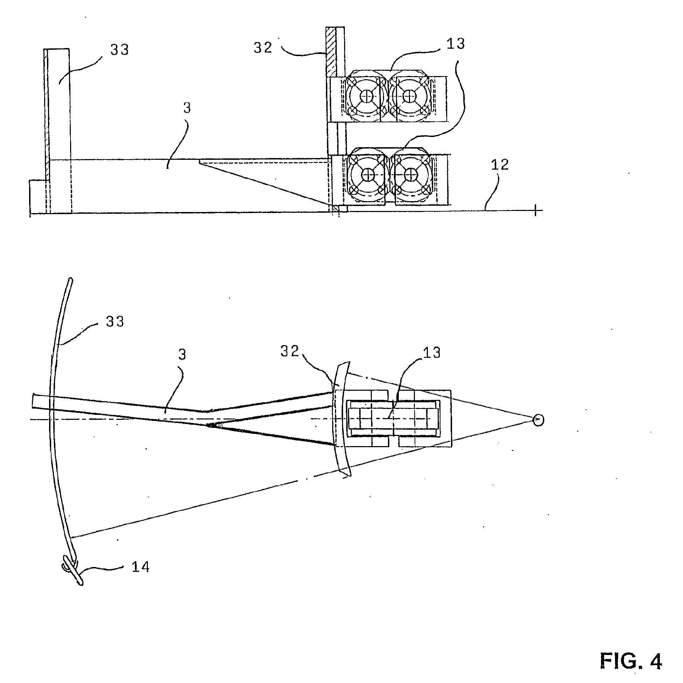

Die Bildung eines gleichmäßigen Schüttgutstranges innerhalb des Rotors 2 wird dabei durch eine äußere und innere Begrenzung 33 und 32 in Ringform verbessert (vgl. auch Fig. 3 und 4). Die äußere, erhöhte Begrenzung 33 und ggf. die innere Begrenzung 32 können zum jeweils benachbarten Segment (vgl. auch Fig. 4) mittels Kettenglieder als Koppelglieder 14 oder ähnlicher geringfügig nachgiebiger Elemente verbunden sein, um somit das im Laufe der Umlaufbewegung abgezogene Schüttgut zum Schüttgutstrang auszubilden.

Wie insbesondere in Fig. 2 verdeutlicht, besteht der Rotor 2 beim Ausführungsbeispiel aus ringsum segmentartig unterteilten Förderwerkzeugen 3, die mittels der Welle 5 rotierend angetrieben ist (vgl. Fig. 1). Obwohl hier eine Kraftmessvorrichtung 20 in Fig. 2 in Stabform gezeigt ist, kann diese auch durch eine andere Ausführung einer Kraftmessvorrichtung ersetzt werden. Nach Zuführung an der Aktivierungszone A und Förderzone F wird das Schüttgut in Richtung zu einer Knickbrücke oder hier einer sektorförmigen Wägeplattform W mit Lastzelle 20 gefördert, die somit ein lastproportionales Messsignal liefert. Wenn sich aufgrund unterschiedlicher Beladung Veränderungen des Schüttgutstranges ergeben, wird dies durch eine Auswerteelektronik erfasst.

Zur Verbesserung der Transportwirkung sind die weitgehend radial verlaufenden, voneinander entkoppelten Förderwerkzeuge 3 bevorzugt in Radialrichtung schaufelartig geschwungen (vgl. Fig. 3) oder abgewinkelt bzw. gekröpft, wie die in der Draufsicht der Fig. 4 dargestellt ist. Entsprechend dem Messsignal der Wägezelle 20 können durch die nicht dargestellte Auswerteelektronik zur Nachregelung des Schüttgutstromes sofort geeignete Gegenmaßnahmen ergriffen werden, beispielsweise durch die Erhöhung der Drehzahl (über die Steuerung des Motors 4) ein erhöhter Schüttgutabzug aus dem Bunker in die Förderzone F vorgenommen werden. Diese Förderzone F nimmt (wie aus Fig. 2 ersichtlich) etwa die Hälfte der Rotorfläche ein, während die gegenüberliegende Hälfte (in Fig. 2 die obere Hälfte über der Wägeplattform W und der Entleerungsstation E sowie ggf. einer sich daran anschließenden Tara-Wägestrecke) durch die wannenartige Abdeckung 10 mit Abstand überdeckt ist. Über dieser wird somit die Aktivierungszone A gebildet, da dort die umlaufenden Rührarme 7 das Schüttgut aktivieren und zur Förderzone F hin leiten. An der Unterseite der Abdeckung 10 ist eine Schütthöhen-Blende 11 vorgesehen, die in Umlauf- oder Förderrichtung ansteigt (vgl. Bezugszeichen 11'), um den ebenfalls ansteigenden Schüttgutstrang in der Höhe zu begrenzen bzw. zu vergleichmässigen.

Beim Dosiervorgang läuft der Rotor 2 entlang der Förderzone F und wird infolge der Aktivierung in der Aktivierungszone A und Abzugsbewegung aus dem Bunker mit Schüttgut beladen. Das Schüttgut wird dabei mittels der Begrenzung 32/33 in der Breite und mittels der Blenden 11/11' in seiner Höhe als Schüttgutstrang vergleichmässigt. Unter Drehung (in Fig. 2: im Uhrzeigersinn) erfolgt somit das weitere Beschicken kontinuierlich.

Die unterhalb der sektorförmigen Wägeplattform W befindliche Lastzelle 20 erfasst dabei die Masse des darüberlaufenden Schüttgutes, bevor es an der Entleerungsstation E abgeworfen wird. Dabei gelangt das Schüttgut nach weiterer Drehung in den die Entleerungsstation E bildenden Abwurfbereich (Fig. 2, rechts), in dem das Gut durch eine Kreisöffnung im Austragboden 12 abgeworfen wird, ggf. auch mit Ausblasung.

Es ist zu erwähnen, dass das Abwerfen des Guts im Abwurfbereich keinen störenden Einfluss auf die Massebestimmung für den nachfolgenden Schüttgutstrom hat, da die Förderwerkzeuge 3 durch Gelenke 13 und Koppelglieder 14 voneinander entkoppelt sind, also sich jeweils einzeln voneinander geringfügig bewegen können, insbesondere in Höhenrichtung, um die Wägeplattform W nicht zu beaufschlagen. Hierzu sind die Gelenke 13 an der die Welle 5 umgebenden Nabe des Rotors 2 beispielsweise in Art von Doppel-Querlenkern (vgl. obere Darstellung in Fig. 4) ausgebildet, wie diese aus der Fahrzeugtechnik als Achsaufhängung bekannt sind. Auch translatorische Verschiebegelenke am zentrumsnahen Bereich jedes Förderwerkzeuges 3 sind möglich, wobei auch Gummi-Metallelemente als elastostatische Gelenke denkbar sind.

Vorstehend wurden die einzelnen Phasen des Dosiervorgangs beschrieben. Selbstverständlich ist der Vorgang kontinuierlich, wobei sich bei Drehung (im Uhrzeigersinn gemäß Fig. 2) ein jeweils weiterer Teil des Rotors 2 in der jeweils nächsten Phase befindet. Bei vollständiger Entleerung der Förderwerkzeuge 3 an der Station E, insbesondere bei gut fließfähigem Schüttgut oder bei zusätzlicher Ausblasung, kann auch auf die vorstehend erwähnte Phase in Art einer Tara-Bestimmung verzichtet werden. Fallweise kann jedoch mit einem zweiten Wägesektor (ähnlich der vorstehend beschriebenen Wägeplattform) nach der Abwurfzone eine Tarawägung des jeweils gerade entleerten Förderwerkzeugs 3 durchgeführt werden, um eine sog. Nettodosierung zu steuern.

Die jeweilige Drehwinkelposition bzw. Winkelgeschwindigkeit des Rotors 2 wird durch bekannte Mittel festgestellt, beispielsweise durch zugeordnete Sensoren (nicht dargestellt). Hierdurch lässt sich der Zeitpunkt bzw. Drehwinkel feststellen, in dem sich der Rotor 2 in der in Fig. 2 gezeigten Position (und jeder weiteren verdrehten Position) befindet. Zu diesem Zeitpunkt wird dann der jeweils aufgenommene Wert festgestellt und unter Differenzbildung der zugeordneten Werte die geförderte Masse bestimmt und aufsummiert bzw. integriert.

Soll somit eine bestimmte Masse gefördert werden, dann ergibt sich diese durch Akkumulierung oder Addition der festgestellten Massewerte. Bei einer kontinuierlichen gravimetrischen Dosierung werden die so bestimmten Messwerte mit der Zeit bzw. der Drehzahl des Rotors 2 in Beziehung gesetzt. Hiervon kann dann ein Regelsignal für den Motor 4 abgeleitet werden, um einen Sollwert für den Durchsatz bzw. eine gewünschte Förderstärke einzuhalten, ebenso ein Steuersignal an den Motor 2 zur kurzzeitigen Erhöhung bzw. Reduzierung der Zuführmenge.

Fig. 3 veranschaulicht eine Abwandlung der Förderwerkzeuge 3 der Dosiervorrichtung 1, wobei im Unterschied zu Fig. 2 die Förderwerkzeuge 3 geschwungen ausgebildet ist. Die vom Motor 4 angetriebene Welle 5 wirkt hierbei auf die Rotornabe, um dieses aufgesetzte Förderorgan in Form eines Sternrades mit voneinander entkoppelten Radialstegen und erhöhten Wänden 32/33 rotieren zu lassen, wobei das vom Behälter kommende Schüttgut kontinuierlich abgezogen wird. Diese Bauweise ermöglicht neben dem geringen Gesamtdurchmesser auch eine kompakte Bauweise, so dass diese Dosiervorrichtung einfach in bestehende Gemengeanlagen oder dgl. integriert werden kann.

In Fig. 4 ist ein stegartiges Förderwerkzeug 3 vergrößert in Seitenabsicht (oben) und in Draufsicht (unten) dargestellt. Im Unterschied zu den bisherigen Ausführungen ist der Fördersteg hier abgewinkelt ausgebildet und erstreckt sich etwas über die äußere Erhöhung 33 hinaus, um innerhalb des Gehäuses eine Räumwirkung zu erzielen. Die übrigen Bauteile werden mit übereinstimmenden Bezugszeichen, wie vorstehend erwähnt gekennzeichnet, wobei auch ein Kettenglied als Koppelglied 14 zur relativ "losen" Verbindung (d.h. mit wenigstens einem Freiheitsgrad) zum nächsten Förderwerkzeug 3 dargestellt ist.

Als Wäge- bzw. Lastzellen können übliche Kraftmessvorrichtungen 20 zum Einsatz kommen, die eine Massebestimmung des auf einer Knickbrücke oder der Wägeplattform W aufliegenden Schüttgutstranges gestatten, wobei die Lastzellen 20 stationär unterhalb des Austragbodens 12 angebracht sind. Bezüglich der elektronischen Dosiersteuerung und Auswerteelektronik der erfindungsgemäßen Dosiervorrichtung wird auf die eingangs genannten Druckschriften hingewiesen.

## Patentansprüche

1. Gravimetrische Dosiervorrichtung für Schüttgüter mit einer Aktivierungszone (A) und einer Förderzone (F) zur Zuführung von Schüttgut zu einem in Horizontalebene umlaufenden Rotor (2) mit sich weitgehend radial erstreckenden Förderwerkzeugen (3), einer gegenüber der Förderzone (F) versetzten Entleerungsstation (E) und einer in Umlaufrichtung dazwischen angeordneten Knickbrücke bzw. Wägeplattform (W) mit einer Kraftmessvorrichtung (20), mit der die Masse des geförderten Guts bestimmbar ist,
**dadurch gekennzeichnet, dass**
die Förderwerkzeuge (3) in wenigstens einem Freiheitsgrad durch gelenkige Koppelglieder (14) voneinander entkoppelt gelagert sind.

2. Dosiervorrichtung nach Anspruch 1, **dadurch gekennzeichnet, dass** die Förderwerkzeugen (3) in zwei Freiheitsgraden (Höhe und Tordierung um Horizontalachse) voneinander entkoppelt sind.

3. Dosiervorrichtung nach Anspruch 1 oder 2, **dadurch gekennzeichnet, dass** zur Entkopplung pro Förderwerkzeug (3) zumindest ein Lager oder Gelenk (13) vorgesehen ist.

4. Dosiervorrichtung nach Anspruch 1 oder 2, **dadurch gekennzeichnet, dass** zur Entkoppelung der Förderwerkzeuge (3) ein elastisches Element, insbesondere ein Gummi-Metallelement vorgesehen ist.

5. Dosiervorrichtung nach einem der Ansprüche1 bis 4, **dadurch gekennzeichnet, dass** über den Förderwerkzeugen (3) ein umlaufender Austragskegel (6) vorgesehen ist, insbesondere mit wenigstens einem umlaufend angetriebenen Rührarm (7).

6. Dosiervorrichtung nach einem der vorhergehenden Ansprüche, **dadurch gekennzeichnet, dass** die Förderwerkzeuge (3) zu einem Ring verbunden sind, insbesondere mittels innerer und/oder äußerer Koppelglieder (14).

7. Dosiervorrichtung nach einem der vorhergehenden Ansprüche, **dadurch gekennzeichnet, dass** die Förderwerkzeuge (3) nach außen und/oder innen hin von einer Erhöhung (32/33) begrenzt sind.

8. Dosiervorrichtung nach einem der vorhergehenden Ansprüche, **dadurch gekennzeichnet, dass** die Förderwerkzeuge (3) - in Draufsicht gesehen - eine geschwungene oder gekröpfte Form in Radialrichtung aufweisen.

9. Dosiervorrichtung nach einem der vorhergehenden Ansprüche, **dadurch gekennzeichnet, dass** die Förderwerkzeuge (3) sich am inneren und äußeren Umfang überlappen und mittels inneren/äußeren gelenkigen Laschen als Koppelglieder (14) verbunden sind.

10. Dosiervorrichtung nach einem der vorhergehenden Ansprüche, **dadurch gekennzeichnet, dass** nach der Entleerungsstation (E) eine Tarawägung der entleerten Förderwerkzeuge (3) vorgesehen ist.

## Claims

1. Gravimetric metering device for bulk products, having an activation zone (A) and a transfer zone (F) for supplying bulk material into a rotor (2) rotated in a horizontal plane with transfer tools (3) extending mainly in the radial direction, an emptying station (E) offset relative to the transfer zone (F), and a bent bridge or weighing platform (W) arranged therebetween in the direction of rotation, provided with a force measuring device (20) for determining the weight of the bulk product transported,
**characterized in that**
the transfer tools (3) are mounted so as to be uncoupled from one another in at least one degree of freedom by jointed coupling elements (14).

2. Metering device according to claim 1, **characterized in that** the transfer tools (3) are uncoupled from each other in two degrees of freedom (height and torsion around horizontal axis).

3. Metering device according to claim 1 or 2, **characterized in that** at least one bearing or joint (13) per transfer tool (3) is provided for uncoupling.

4. Metering device according to claim 1 or 2, **characterized in that** a flexible element, in particular a rubber metal element is provided for the uncoupling of the transfer tools (3).

5. Metering device according to any of claims 1 to 4, **characterized in that** a circulating discharge cone (6) is provided above the transfer tools (3), said cone comprising in particular at least one rotary-driven stirrer arm (7).

6. Metering device according to any of the preceding claims, **characterized in that** the transfer tools (3) are connected to form a ring, in particular by means of interior and/or exterior coupling elements (14).

7. Metering device according to any of the preceding claims, **characterized in that** the transfer tools (3) are limited to the outside and/or the inside by an elevation (32/33).

8. Metering device according to any of the preceding claims, **characterized in that** the transfer tools (3) - seen in plan view - exhibit a bent or cranked form in the radial direction.

9. Metering device according to any of the preceding claims, **characterized in that** the transfer tools (3) overlap at their interior and exterior perimeters and are connected by means of interior/exterior articulated brackets as coupling elements (14).

10. Metering device according to any of the preceding claims, **characterized in that** a tare weighing of the emptied transfer tools (3) is provided downstream the emptying station (E).

## Revendications

1. Dispositif de dosage gravimétrique pour produits en vrac, comprenant une zone d'activation (A) ; une zone de convoyage (F) pour l'amenée de produits en vrac vers un rotor (2) en révolution dans un plan horizontal ; des outils de convoyage (3) s'étendant majoritairement dans le sens radial, faisant partie d'un poste de vidage (E) décalé vis-à-vis de la zone de convoyage (F) ; et un portique articulé ou une plate-forme de pesage (W) occupant une position intermédiaire dans le sens de révolution, et comportant un dispositif dynamométrique (20) au moyen duquel la masse des produits convoyés peut être déterminée, **caractérisé par le fait que**
les outils de convoyage (3) sont montés avec découplage réciproque selon au moins un degré de liberté, par l'intermédiaire de pièces articulées d'accouplement (14).

2. Dispositif de dosage selon la revendication 1, **caractérisé par le fait que** les outils de convoyage (3) sont découplés les uns des autres selon deux degrés de liberté (hauteur et torsion autour d'un axe horizontal).

3. Dispositif de dosage selon la revendication 1 ou 2, **caractérisé par le fait qu'**au moins un palier ou une articulation (13) est prévu(e), pour chaque outil de convoyage (3), en vue de provoquer le découplage.

4. Dispositif de dosage selon la revendication 1 ou 2, **caractérisé par le fait qu'**un élément élastique, notamment un élément du type caoutchouc-métal, est prévu pour le découplage des outils de convoyage (3).

5. Dispositif de dosage selon l'une des revendications 1 à 4, **caractérisé par le fait qu'**un cône de déversement (6) en révolution, notamment muni d'au moins un bras agitateur (7) mené en révolution, est prévu au-dessus des outils de convoyage (3).

6. Dispositif de dosage selon l'une des revendications précédentes, **caractérisé par le fait que** les outils de convoyage (3) sont reliés pour former un anneau, notamment au moyen de pièces d'accouplement (14) intérieures et/ou extérieures.

7. Dispositif de dosage selon l'une des revendications précédentes, **caractérisé par le fait que** les outils de convoyage (3) sont délimités, vers l'extérieur et/ou vers l'intérieur, par une zone rehaussée (32/33).

8. Dispositif de dosage selon l'une des revendications précédentes, **caractérisé par le fait que** les outils de convoyage (3) présentant - observés en plan - une forme vrillée ou coudée dans le sens radial.

9. Dispositif de dosage selon l'une des revendications précédentes, **caractérisé par le fait que** les outils de convoyage (3) se chevauchent sur les pourtours intérieur et extérieur, et sont solidarisés au moyen de pattes articulées intérieures/extérieures, remplissant la fonction de pièces d'accouplement (14).

10. Dispositif de dosage selon l'une des revendications précédentes, **caractérisé par le fait qu'**un tarage des outils de convoyage (3) vidés est prévu après le poste de vidage (E).
